# EUROPÄISCHE PATENTSCHRIFT

(11) **EP 1 464 521 B1**
(45) Veröffentlichungstag und Bekanntmachung des Hinweises auf die Patenterteilung: **15.11.2006**
(21) Anmeldenummer: 04004636.9
(22) Anmeldetag: 01.03.2004
(51) Int. Cl.: B60G 21/055, F16H 25/18

(54) **Schwenkmotorgetriebe eines Kraftfahrzeugstabilisators**
Rotary actuator for a vehicle torsion bar
Vérin rotatif pour une barre stabilisatrice d'un véhicule

(30) Priorität: 02.04.2003 DE 10314861
(43) Veröffentlichungstag der Anmeldung: 06.10.2004
(73) Patentinhaber: Bayerische Motoren Werke Aktiengesellschaft, 80809 München (DE)
(72) Erfinder: Bock, Michael, 81673 München (DE); Wussmann, Thomas, 80637 München (DE); Schmidt, Roland, 82131 Stockdorf (DE)

(56) Entgegenhaltungen:
- EP-A- 0 365 377
- DE-A1- 10 002 455
- DE-A1- 10 037 486
- DE-A1- 10 133 431
- DE-U1- 20 214 653
- US-A- 3 198 539

## Beschreibung

Die Erfindung betrifft ein Schwenkmotorgetriebe eines zur Wankregelung geteilten Kraftfahrzeugstabilisators, nach dem Oberbegriff des ersten Anspruchs.

Es ist bereits bekannt, einen Kraftfahrzeugstabilisator in eine erste, der Aufhängung des linken Rades einer Fahrzeug-Achse zugeordnete Stabilisatorhälfte und in eine zweite, der Aufhängung des rechten Rades dieser Fahrzeug-Achse zugeordnete Stabilisatorhälfte zu unterteilen. Sind diese Stabilisatorhälften um deren gemeinsame Längsachse gegeneinander verdrehbar, kann gegenüber Fahrwerken mit einstückigem Stabilisator eine deutlich gesteigerte Wankstabilität erreicht werden, wenn zwischen den beiden Stabilisatorhälften ein geeigneter Schwenkmotor vorgesehen ist, der aufgrund einer geeigneten Ansteuerung diese Stabilisatorhälften bedarfsgerecht gegeneinander verdreht. Dieser Schwenkmotor kann hydraulisch angetrieben werden.

Anstelle eines hydraulischen Drehantriebes kann auch ein elektromechanischer Schwenkmotor vorgesehen werden, der einen Elektromotor und ein mechanisches Getriebe sowie eine Feststellbremse umfasst, wie dies in der DE 198 46 275 A1 beschrieben ist. Dann erhält man einen Stabilisator, dessen beide Stabilisatorhälften, die durch einen elektromechanischen Schwenkmotor miteinander verbunden sind, durch diesen gezielt zueinander verdreht werden können, damit ein gewünschtes Stabilisatormoment erzeugt wird, welches dann das Wanken des Fahrzeug-Aufbaus verhindert.

Elektromotore zeichnen sich üblicherweise durch hohe Drehzahlen und geringe Nennmomente aus und sind per se für den vorliegenden Anwendungsfall in einem elektromechanischen Stabilisator nicht besonders gut geeignet. Der elektromechanische Schwenkmotor hierin sollte nämlich hohe Drehmomente bei geringen Drehwinkeln erzeugen. Für das benötigte Getriebe ergibt sich aus diesem Widerspruch zwangsläufig eine hohes Übersetzungsverhältnis, welches jedoch Nachteile mit sich bringt. So resultiert hieraus nicht nur eine große Baugröße (aufgrund der erforderlichen Planetenstufen), sondern auch ein relativ niedriger Wirkungsgrad (aufgrund der unvermeidbaren Reibungsverluste). In Abhängigkeit vom jeweiligen Anwendungsfall sind derart hohe Drehmomente am Stabilisator zu realisieren, dass die hierfür erforderlichen hohen Übersetzungsverhältnisse mit dem zur Verfügung stehenden Bauraum, sowie dem erforderlichen Wirkungsgrad nicht zu verwirklichen sind.

Die DE 101 33 431 beschreibt deshalb Schwenkmotoren mit einfachem Getriebe, welches auch für einen elektromotorischen Stellantrieb gut geeignet ist, nämlich ein Kurvenbahn-Getriebe, das mit zwei den Stabilisatorhälften zugeordneten, um eine gemeinsame Längsachse gegeneinander verdrehbaren Kurvenbahnträgern, in deren sich voneinander unterscheidenden und sich zumindest abschnittsweise im wesentlichen in Richtung der gemeinsamen Längsachse erstreckenden Kurvenbahnen, ein mittels des Verstellantriebs längs dieser Kurvenbahnen verschiebbares Koppelelement geführt ist.

Dabei sei an dieser Stelle ausdrücklich darauf hingewiesen, dass der Verstellantrieb keineswegs in Form eines Elektromotors ausgebildet sein muss, jedoch sein kann. Die besonderen Vorteile des vorgeschlagenen Getriebes kommen jedoch auch bei anderen Verstellantrieben zum Tragen, so zum Beispiel in Verbindung mit einer das Koppelelement längs der Kurvenbahnen verschiebenden, bevorzugt hydraulischen Zylinder-Kolben-Einheit.

Es ist auch möglich, das Koppelelement einfach durch einen Elektromotor längs der Kurvenbahnen zu verschieben, zum Beispiel unter Zwischenschaltung einer Gewindespindel.

Im Betrieb wird zur Kompensation, der zum Beispiel während einer Kurvenfahrt auftretenden Wankbewegung des Fahrzeugaufbaus, vom Schwenkmotor eine gegensinnige Drehbewegung der Stabilisatorhälften erzeugt. Die auftretende Belastung ist dabei selbstverständlich bei Links- und Rechtskurven jeweils entgegengesetzt gerichtet. Bei Wechsel der Stabilisierungsrichtung wird das Drehmoment des Schwenkmotors folglich auch in umgekehrter Richtung benötigt. Spiel in tangentialer Richtung zwischen den Kurvenbahnen und dem Koppelelement erzeugt im Zuge dieses Belastungswechsels von einer in die jeweils andere Belastungslage Geräusche. Der Wechsel der Belastungslagen findet immer in einem Bereich einer Mittellage zwischen den Belastungslagen statt. In der Mittellage sind der Stabilisator und damit auch das Kurvenbahn-Getriebe nahezu momentenfrei. Dieser Wechsel der jeweiligen Anlagefläche erzeugt nach dem Abheben aus der einen Belastungslage nach Überwinden des prinzipbedingten Spiels durch das Aufprallen oder Anschlagen in der anderen Belastungslage ein Geräusch, das sich störend auf den Komfort eines entsprechend ausgestatteten Fahrzeugs auswirkt. Da sich der Schwenkmotor bei Geradeausfahrt oder leichten Kurven immer in diesem Bereich der Neutrallage befindet, treten Belastungswechsel und die damit verbundenen Geräusche häufig auf. Hiermit ist neben der Geräuschentwicklung auch ein erhöhter Verschleiß der betreffenden Abschnitte der Kontaktbereiche verbunden.

Ausgehend von einem Kurvenbahn-Getriebe des vorstehend beschriebenen Schwenkmotors kann die betriebsbedingte Geräuschentwicklung dadurch gesenkt werden, dass das Koppelelement des Getriebes mindestens ein in die Kurvenbahnen der Kurvenbahnträger eingreifendes Element aufweist, das derart mit einer Vorspannung beaufschlagt ist, dass es sich in einer im wesentlichen unbelasteten Neutrallage des Getriebes in Anlage mit einer Kurvenbahn jedes der Kurvenbahnträger befindet.

Dazu können zumindest zwei Elemente in jeweils voneinander verschiedene Kurvenbahnen zweier voneinander getrennter Kurvenbahnträger eingreifend angeordnet und Mittel zum federelastischen Verspannen der beiden eingreifenden Elemente vorgesehen sein. Die eingreifenden Elemente können auf einer gemeinsamen Achse angeordnet sein, wobei die Achse beispielsweise aus einem federelastischen Material besteht. Alternativ oder auch zusätzlich können die Bahnen von zwei einander gegenüberliegen Kurvenbahnen zur Erzeugung einer Vorspannung in der Achse um einen definierten Betrag zueinander versetzt angeordnet sein.

Desweiteren sind Federelemente an der genannten Achse und/oder zwischen den (zumindest zwei) genannten Achsen zur Erzeugung einer Vorspannung denkbar. Dies können je nach erforderlicher Federsteifigkeit einfache Schraubenfedern - als Zug- und/oder Druckfedern ausgebildet - sein. Die Achsen können zudem an dem Koppelelement angelenkt sein, d.h. dass die die eingreifenden Elemente tragenden Achsen gegenüber dem Koppelelement zumindest geringfügig beweglich, insbesondere verdrehbar oder verschwenkbar sind, und zwar gegeneinander unter Einwirkung des oder der Federelement(e).

Zur wesentlichen Minderung des Widerstands oder der Reibung beim Verschieben des Koppelelements unter Last ist das in eine Kurvenbahn eingreifende Element als Rolle oder Rollenpaar ausgebildet. Um ein Abheben der Rollen von einer jeweiligen Kurvenbahn generell zu unterbinden, kann auch eine stete Anlage der Rollen an den Kurvenbahnen durch Einstellung einer hohen Vorspannung erreicht werden.

Ein solches Kurvenbahn-Getriebe, bei dem ein vorgespanntes Koppelelement gleichzeitig in zwei unterschiedlichen Kurvenbahnen geführt ist, die ihrerseits in zwei voneinander getrennten Kurvenbahnträgern vorgesehen sind, die gegeneinander um eine gemeinsame Längsachse verdrehbar sind, hat den Nachteil, dass bei der Montage des Kurvenbahngetriebes auf das Koppelelement die gesamte Spielausgleichsvorspannkraft aufgebracht werden muss.

Daher ist es Aufgabe der Erfindung, ein Kurvenbahn-Getriebe, bei dem ein vorgespanntes Koppelelement gleichzeitig in zwei unterschiedlichen Kurvenbahnen geführt ist, die ihrerseits in zwei voneinander getrennten Kurvenbahnträgern vorgesehen sind, so herzustellen, dass das Koppelelement ohne wesentliche Krafteinleitung in das zu montierende Kurvenbahn-Getriebe eingebaut werden kann.

Die Aufgabe wird mit den kennzeichnenden Merkmalen des Anspruchs 1 gelöst. Eine bevorzugte Ausführungsform der Erfindung beschreibt der abhängige Anspruch.

Die Erfindung betrifft einen Schwenkmotor zur Wankregelung, der mit beiden Stabilisatorteilen eines geteilten Kraftfahrzeugstabilisators drehmoment-übertragend verbunden ist und mindestens einen Verstellantrieb für ein auf einer Antriebsspindel verschiebbar geführtes Koppelelement sowie ein von diesem beaufschlagtes Kurvenbahn-Getriebe umfasst. Das Kurvenbahn-Getriebe besteht aus zwei den beiden Stabilisatorteilen zugeordneten, um eine gemeinsame Längsachse gegeneinander verdrehbaren Kurvenbahnträgern, in deren sich voneinander unterscheidenden und sich zumindest abschnittsweise im wesentlichen in Richtung der gemeinsamen Längsachse erstreckenden, als Nuten ausgebildeten Kurvenbahnen, das in diese Nuten hineinragende und die Kurvenbahnträger gegeneinander verspannende Koppelelement geführt ist. Das Kurvenbahn-Getriebe ist dadurch gekennzeichnet, dass die Nuten parallele Nutflanken besitzen, die mindestens an einem Ende jeder Kurvenbahn so aufgeweitet sind, dass das Koppelelement dort ohne dessen Einzelteile gegeneinander vorzuspannen in die Kurvenbahnträger eingebracht und/oder in diesen montiert werden kann.

Eine solche Aufweitung der Nutflanken an mindestens einem Ende der Kurvenbahnen hat den Vorteil, dass die Kurvenrollenbolzen ohne Vorspannen des Koppelelements montiert werden können.

Die Montage des Kurvenbahn-Getriebes könnte dann vorteilhafterweise in folgenden Schritten ablaufen:

Das erste Kurvenrollenbolzenpaar des Koppelelements wird ohne Vorspannung in die Kurvenbahnträger eingebracht und montiert. Dazu sind Koppelelement und Kurvenbahnträger in Mittelstellung zueinander ausgerichtet. Dieses Ausrichten kann durch jeweils eine bei der Fertigung der Kurvenbahnen in die Kurvenbahnträger eingebrachte, durchgehende, radial gerichtete Zentrierbohrung erleichtert werden, indem zur Positionierung ein Zentrierstift durch die Zentrierbohrungen gesteckt wird. So können die Kurvenbahnen der beiden Kurvenbahnträger in eine Position zueinander gebracht werden, in der die Kurvenrollenbolzen nur in Mittelstellung des Koppelelements montiert werden können. Nach der Montage des ersten Kurvenrollenpaares befinden sich die Kurvenbahnträger und das Koppelelement in einer definierten Position zueinander. Der Zentrierstift kann entfernt werden.

Nachfolgend wird das zweite Kurvenrollenbolzenpaar am Koppelelement angebracht, indem zuerst die Kurvenrollenbolzen ohne Kurvenrollen montiert werden. Wegen der fehlenden Kurvenrollen können die Bolzenpaare in den Kurvenbahnen in einem Winkel ungleich 90° zueinander stehen. Dadurch ist das Koppelelement vorspannungsfrei.

Zur nachfolgenden Montage der Kurvenbahnträger Kurvenrollen wird nun das Koppelelement in die Endposition der Kurvenbahnen gefahren, in der diese aufgeweitet sind. Die Aussparungen in den Kurvenbahnen erstrecken sich in Wirkungsrichtung der Vorspannkraft und sind so groß, dass ein Verdrehen der Kurvenbahnträger zur vorspannungsfreien Kurvenrollenmontage möglich ist. Beim Zurückfahren des Koppelelements, aus dieser Endposition heraus, stellt sich dann automatisch der Spielausgleich zwischen den Kurvenbahnträgern ein, da das Koppelelement vorgespannt wird.

Eine bevorzugte Ausführungsform der Erfindung zeichnet sich dadurch aus, dass die sonst parallelen Nutflanken in den Kurvenbahnträgern mindestens an einem Ende jeder Kurvenbahn auf der bei Betrieb des Schwenkmotors lastabgewandten Nutflankenseite aufgeweitet sind.

Ist die Ausbuchtung in der Kurvenbahn auf der Seite der Nut, an der bei Betrieb des Schwenkmotors zur Wankregelung die Kurvenrolle des Koppelelements nicht anliegt, hat das den Vorteil, dass sich die Ausbuchtung während des Betriebs des Schwenkmotors nicht auf irgend eine Art negativ auswirkt.

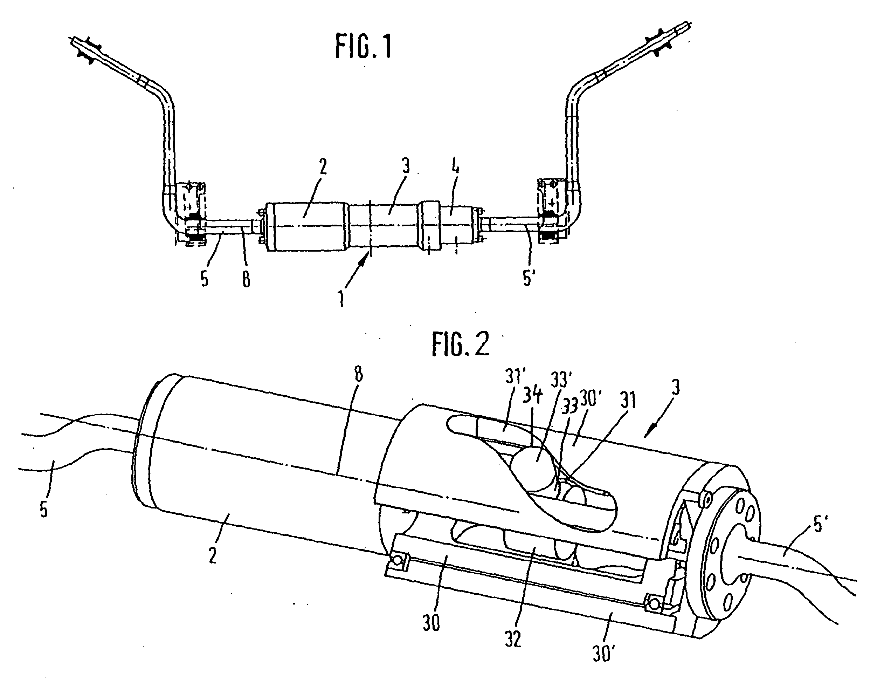

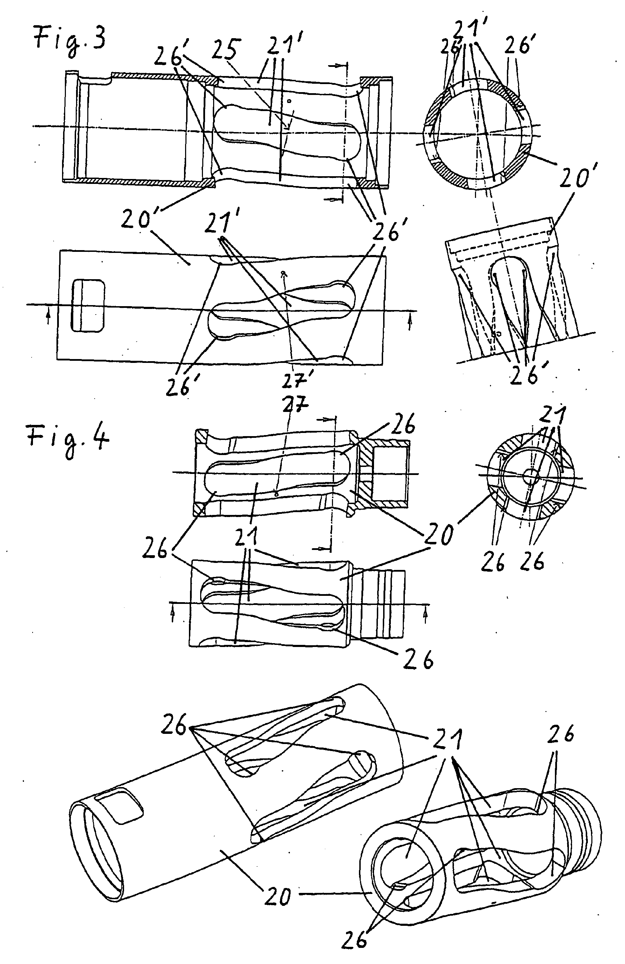

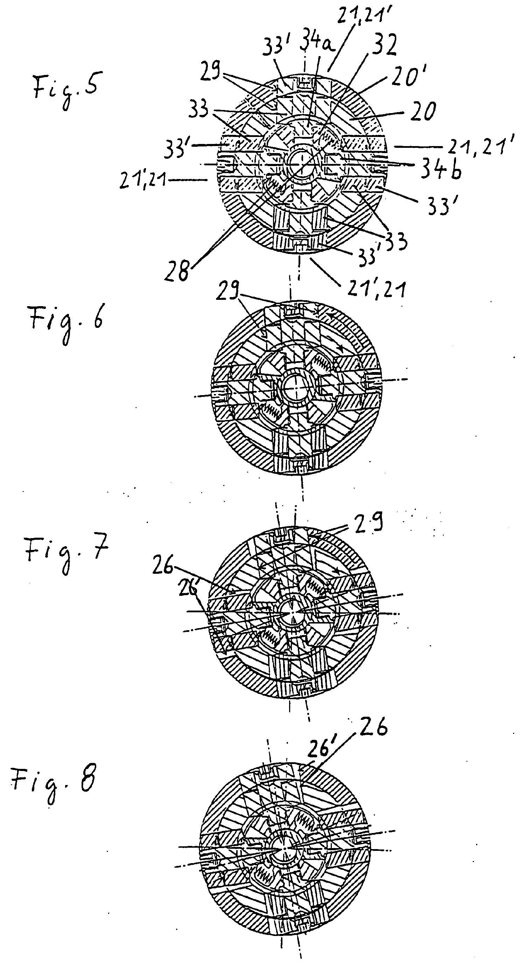

Im folgenden wird die Erfindung anhand eines bevorzugten Ausführungsbeispiels weiter erläutert. Dazu zeigt die Figur 1 einen Kraftfahrzeugstabilisator mit elektromechanischem Schwenkmotor, nach dem Stand der Technik, zum Verdrehen zweier Stabilisatorhälften gegeneinander. Aus Figur 2 geht das Funktionsprinzip des aufgebrochen dargestellten Schwenkmotors nach dem Stand der Technik am besten hervor. In Figur 3 ist in vier Abbildungen, zwei Schnittdarstellungen und zwei Ansichten, der äußere Kurvenbahnträger gemäß der Erfindung beschrieben. Figur 4 zeigt entsprechend Figur 3 den inneren Kurvenbahnträger gemäß der Erfindung, allerdings zusätzlich noch in einer räumlichen Darstellung. Die **Figuren 5-8** zeigen in vier Schnitten durch das erfindungsgemäße Schwenkmotorgetriebe, jeweils eine Position des Koppelelements während des Betriebs des Schwenkmotors zur Wankregelung.

Ein elektromechanischer Schwenkmotor 1, gemäß dem Stand der Technik, ist in **Figur 1** dargestellt, umfassend einen Elektromotor als Verstellantrieb 2 und ein mechanisches Schwenkmotorgetriebe 3, sowie eine Feststellbremse 4. Die Dynamik des Gesamtsystems ist dabei maßgeblich durch die Getriebeübersetzung, die Massenträgheit des Systems und die Torsionssteifigkeit der beiden Stabilisatorhälften 5, 5' gekennzeichnet. Die Feststellbremse 4 wird benötigt, um den Elektromotor 2 vor einer Überlastung infolge hoher Stabilisatormomente zu schützen. Sie kann auch entfallen, zum Beispiel wenn ein selbsthemmendes Schwenkmotorgetriebe 3 verwendet wird.

Figur 2 zeigt den Schwenkmotor 1, nach dem Stand der Technik, bestehend aus dem Elektromotor als Verstellantrieb 2, sowie aus dem mechanischen Schwenkmotorgetriebe 3, in Form eines Kurvenbahn-Getriebes, für welches im weiteren ebenso die Bezugsziffer 3 verwendet wird. Das Kurvenbahn-Getriebe 3 besteht unter anderem aus zwei Kurvenbahnträgern 30, 30', in denen symmetrisch auf dem Umfang verteilt viermal, nur teilweise sichtbar, jeweils Kurvenbahnpaare 31, 31' als Nuten eingefräst sind. Die Kurvenbahnträger 30, 30' sind als konzentrisch zueinander angeordnete Hohlzylinder ausgebildet, für welche im folgenden ebenfalls die Bezugsziffern 30, 30' verwendet werden. In die Mantelflächen dieser Hohlzylinder 30, 30' sind dabei die im wesentlichen in Richtung der gemeinsamen Zylinder-Längsachse 8, dabei jedoch auch zumindest bereichsweise und zumindest geringfügig gegenüber dieser geneigt verlaufenden Kurvenbahnpaare 31, 31' als Nuten eingebracht. Dabei ist es funktionswesentlich, dass sich die beiden Kurvenbahnen 31, 31' jedes Kurvenbahnpaars in ihrem Verlauf voneinander unterscheiden.

Am ersten Kurvenbahnträger 30 ist die eine Stabilisatorhälfte 5 und am zweiten Kurvenbahnträger 30' die andere Stabilisatorhälfte 5' befestigt. Ein Bruchteil der Stabilisatorhälften 5, 5' sind in Figur 2 gezeigt, woraus hervorgeht, dass auch die Stabilisatorhälften 5, 5' im Bereich dieser Befestigung koaxial zu den Hohlzylindern 30, 30' angeordnet sind.

In den Kurvenbahnen 31, 31', der vier am Umfang verteilten, gleich gestalteten Kurvenbahnpaare, ist ein Koppelelement 32 geführt. Dieses im wesentlichen zentral innerhalb der Hohlzylinder 30, 30' angeordnete und längs deren gemeinsamer Zylinder-Längsachse 8 verschiebbare Koppelelement 32 trägt an jedem von vier Kurvenrollenbolzen 34 zwei Kurvenrollen 33, 33', die jeweils um eine nicht dargestellte Kurvenrollenbolzenmittelachse, die senkrecht zur genannten Längsachse 8 verläuft, verdrehbar sind. Dabei greifen die Kurvenrollen 33 in die Kurvenbahnen 31 und die Kurvenrollen 33' in die Kurvenbahnen 31' ein. Wird nun das Koppelelement 32 mittels des Verstellantriebes 2 entlang der Zylinder-Längsachse 8, längs der beiden sich voneinander unterscheidenden Kurvenbahnen 31, 31' verschoben, so werden zwangsläufig die beiden Hohlzylinder / Kurvenbahnträger 30, 30' relativ zueinander verdreht. Demzufolge ist aus einer Längsverschiebung des Koppelelementes 32 eine gegenseitige Verdrehbewegung der an den Hohlzylindern 30, 30' befestigten Stabilisatorhälften 5, 5' erzielbar.

Das Koppelelement 32 ist mittels einer, vom insbesondere elektromotorischen Verstellantrieb 2 in Rotation versetzbaren, nicht sichtbaren Gewindespindel entlang der Zylinder-Längsachse 8, in Abhängigkeit von der Drehrichtung der Gewindespindel hin bzw. her verschiebbar. Bei entsprechend selbsthemmender Auslegung dieses Schwenkmotorgetriebes 3 wird dann im übrigen die in Verbindung mit **Fig.1** erwähnte Feststellbremse (Bezugsziffer 4) nicht benötigt. Anstelle dieses Verstellantriebes 2 mit der Gewindespindel kann aber auch eine hydraulische Zylinder-Kolben-Einheit vorgesehen sein, um das Koppelelement 32 wie gewünscht verschieben zu können.

Die Figur 3 zeigt in vier Abbildungen einen dem Kurvenbahnträger 30' aus Figur 2 ähnlich aufgebauten Kurvenbahnträger 20', allerdings zusätzlich mit den erfindungsgemäßen Merkmalen. Der äußere Kurvenbahnträger 20' ist eine Außenhülse mit vier regelmäßig am Umfang verteilten, als Nuten eingefrästen Kurvenbahnen 21'. Die radial gerichteten Flanken der Nuten verlaufen außer an den Kurvenbahnenden parallel. Mit der Bezugsziffer 25 ist eine Hilfslinie bezeichnet, zur Darstellung der Kurvenbahnbreite im parallelen Bereich der Nutflanken. Dagegen sind an Kurvenbahnenden die Kurvenbahnen 21' so aufgeweitet, dass das in dieser Figur nicht gezeichnete Koppelelement 32, ohne dessen Einzelteile gegeneinander vorzuspannen, in die Kurvenbahnträger 20' eingebracht und/oder in diesen montiert werden kann. Die jeweiligen Aufweitungen 26' der Enden jeder Kurvenbahn 21' befinden sich auf der bei Betrieb des Schwenkmotors 1 lastabgewandten Nutflankenseite. Mit der Bezugsziffer 27' ist eine bei der Fertigung der Kurvenbahnen 21' in die Kurvenbahnträger 20' eingebrachte, durchgehende, radial gerichtete Zentrierbohrung bezeichnet, die dazu dient, vor der Montage Koppelelement 32 und Kurvenbahnträger 20' in Mittelstellung zueinander auszurichten, indem zur Positionierung ein nicht gezeichneter Zentrierstift durch die Zentrierbohrungen 27, 27' der beiden Kurvenbahnträger 20 (Fig.4), 20' gesteckt wird. So können die Kurvenbahnen 21' der beiden Kurvenbahnträger 20, 20' in eine Position zueinander gebracht werden, in der die Kurvenrollenbolzen 34 (Fig.2, Fig.5-8) nur in Mittelstellung des Koppelelements 32 montiert werden können.

Die Figur 4 zeigt in fünf Abbildungen einen dem inneren Kurvenbahnträger 30 aus Figur 2 ähnlich aufgebauten inneren Kurvenbahnträger 20, eine Innenhülse mit vier regelmäßig am Umfang verteilten, als Nuten eingefrästen Kurvenbahnen 21, allerdings zusätzlich mit den erfindungsgemäßen Merkmalen. Die radial gerichteten Flanken der Nuten verlaufen, außer an den Kurvenbahnenden, parallel. Dagegen sind an Kurvenbahnenden die Kurvenbahnen 21 so aufgeweitet, dass das in dieser Figur nicht gezeichnete Koppelelement 32, ohne dessen Einzelteile gegeneinander vorzuspannen, in die Kurvenbahnträger 20 eingebracht und/oder in diesen montiert werden kann. Die jeweiligen Aufweitungen 26 der Enden jeder Kurvenbahn 21 befinden sich auf der bei Betrieb des Schwenkmotors 1 lastabgewandten Nutflankenseite. Mit der Bezugsziffer 27 ist eine bei der Fertigung der Kurvenbahnen 21 in die Kurvenbahnträger 20 eingebrachte, durchgehende, radial gerichtete Zentrierbohrung bezeichnet, die dazu dient, vor der Montage Koppelelement 32 und Kurvenbahnträger 20 in Mittelstellung zueinander auszurichten, indem zur Positionierung ein nicht gezeichneter Zentrierstift durch die Zentrierbohrungen 27, 27'(Fig.3) gesteckt wird. So können die Kurvenbahnen 21, 21' der beiden Kurvenbahnträger 20, 20' in eine Position zueinander gebracht werden, in der die Kurvenrollenbolzen 34 (Fig.2, Fig.5-8) nur in Mittelstellung des Koppelelements 32 montiert werden können.

Die **Figuren 5 bis 8** zeigen in vier Schnitten durch das erfindungsgemäße, fertig montierte Schwenkmotorgetriebe, jeweils eine Position des Koppelelements 32 während des Betriebs des Schwenkmotors 1 zur Wankregelung. Das Koppelelement 32, das die beiden Kurvenbahnträger 20, 20' gegeneinander verdreht, besitzt einen gemäß DE 10133431 A1 ausgeführten Spielausgleich.

**Figur 5** zeigt das Koppelelement 32 (allerdings das komplett montierte) in einer Stellung in der Mitte der Kurvenbahnen 21, 21', der ersten Montagestellung, in der das Koppelelement 32 kein Drehmoment überträgt, der Schwenkmotor 1 also nicht momentenbeaufschlagt ist. Die Druckfedern 28 verspannen die Kurvenrollenbolzenpaare 34a, 34b mit einem Moment von zum Beispiel 120 Nm. Durch diesen Spielausgleich haben alle Kurvenrollen 33, 33' Kontakt (angedeutet durch Bezugsziffer 29) zu ihren zugehörigen, hier parallel zueinander verlaufenden, Nutflanken der Kurvenbahnen 21, 21', da die Druckfedern 28 ein mögliches Spiel zwischen Kurvenrollenumfang und Nutflanke überdrücken.

**Figur 6** (es gelten die Bezugszeichen in Figur 5 entsprechend) zeigt das Koppelelement 32 in einer Stellung zwischen der Mitte der Kurvenbahnen 21, 21' (Stellung von Fig. 5) und einer Endlage in den Kurvenbahnen 21, 21'. Der Schwenkmotor 1 ist also momentenbeaufschlagt. Die Stabilisatorhälften 5, 5' (Fig.1, 2) sind gegeneinander verdreht, woraus sich ein für das Koppelelement 32 zu übertragendes Drehmoment ergibt, das größer ist als das zu Figur 5 beschriebene. Dadurch liegen die Kurvenrollen 33, 33' an den Nutflanken von äußerem und innerem Kurvenbahnträger 20', 20 an jeweils gegenüberliegenden Seiten an (Bezugsziffer 29). Es ist kein Spiel vorhanden.

**Figur 7** (es gelten die Bezugszeichen in Figur 5 entsprechend) zeigt das Koppelelement 32 in einer Endlagenstellung in den Kurvenbahnen 21, 21'. Der Schwenkmotor 1 ist momentenbeaufschlagt. Die Stabilisatorhälften 5, 5', (Fig.1, 2) sind gegeneinander verdreht, woraus sich für das Koppelelement 32 ein maximales zu übertragendes Drehmoment ergibt. Die Kurvenrollen 33, 33' sind, was das Spiel betrifft, entsprechend der Beschreibung zu Figur 6 positioniert (Bezugsziffer 29). Auf der lastabgewandten Seite der Kurvenbahnen 21, 21' ist, in Abweichung vom parallelen Verlauf der Nutflanken, jeweils eine Aussparung 26, 26' eingebracht.

**Figur 8** dagegen (es gelten die Bezugszeichen in Figur 5 entsprechend) zeigt das Koppelelement 32 in einer Endlagenstellung des momentenfreien oder nicht zwischen die Stabilisatorhälften 5, 5', (Fig.1, 2) montierten Schwenkmotors 1. Die Stabilisatorhälften 5, 5' sind entlastet. Das Koppelelement 32 überträgt kein Drehmoment. Äußerer und innerer Kurvenbahnträger 20', 20 können um einen weiteren Betrag in Umfangsrichtung gegeneinander verdreht werden, so dass sich die Kurvenrollen 33, 33' in die Aussparungen 26, 26' hinein erstrecken. Dadurch werden die Druckfedern 28 des Spielausgleichs entspannt, und der Kontakt zwischen Kurvenrollen 33, 33' und Nutflanken ist lastfrei, was eine einfache Kurvenrollenmontage ermöglicht, ohne eine ansonsten nötige erhebliche Krafteinleitung.

## Patentansprüche

1. Schwenkmotor (1) zur Wankregelung, der mit beiden Stabilisatorteilen (5, 5') eines geteilten Kraftfahrzeugstabilisators drehmomentübertragend verbunden ist und mindestens einen Verstellantrieb (2) für ein auf einer Antriebsspindel verschiebbar geführtes Koppelelement (32), sowie ein von diesem beaufschlagtes Kurvenbahn-Getriebe umfasst, das aus zwei den beiden Stabilisatorteilen (5, 5') zugeordneten, um eine gemeinsame Längsachse (8) gegeneinander verdrehbaren Kurvenbahnträgern (30, 30' bzw. 20, 20') besteht, in deren sich voneinander unterscheidenden und sich zumindest abschnittsweise im wesentlichen in Richtung der gemeinsamen Längsachse (8) erstreckenden, als Nuten ausgebildeten Kurvenbahnen (31, 31' bzw. 21, 21'), das in diese Nuten hineinragende und die Kurvenbahnträger (30, 30' bzw. 20, 20') gegeneinander verspannende Koppelelement (32) geführt ist, **dadurch gekennzeichnet, dass** die Nuten parallele Nutflanken besitzen, die mindestens an einem Ende jeder Kurvenbahn (21, 21') so aufgeweitet sind, dass das Koppelelement (32) dort, ohne dessen Einzelteile gegeneinander vorzuspannen, in die Kurvenbahnträger (20, 20') eingebracht und/oder in diesen montiert werden kann.

2. Schwenkmotor (1) nach Anspruch 1, **dadurch gekennzeichnet, dass** die sonst parallelen Nutflanken mindestens an einem Ende jeder Kurvenbahn (21, 21') auf der bei Betrieb des Schwenkmotors (1) lastabgewandten Nutflankenseite aufgeweitet sind.

3. Verfahren zur Montage eines Kurvenbahn-Getriebes nach einem der Ansprüche 1 oder 2, **dadurch gekennzeichnet, dass** Koppelelement (32) und Kurvenbahnträger (20, 20') in Mittelstellung zueinander ausgerichtet werden, bevor das erste Kurvenrollenbolzenpaar (34a oder 34b) des Koppelelements (32) ohne Vorspannung in die Kurvenbahnträger (20, 20') eingebracht und montiert wird, wobei nach dem Ausrichten zur Positionierung der Kurvenbahnträger (20, 20') zueinander, durch jeweils eine, bei der Fertigung der Kurvenbahnen (21, 21') in die Kurvenbahnträger (20, 20') eingebrachte, durchgehende, radial gerichtete Zentrierbohrung (27, 27'), ein Zentrierstift gesteckt wird.

## Claims

1. An oscillating motor (1) for roll control, which is connected in a torque transmitting manner to the two stabiliser parts (5, 5') of a divided motor vehicle stabiliser and comprises at least one adjustment drive (2) for a coupling element (32) displaceably guided on a drive spindle and a curved path gear mechanism which is acted upon thereby, which comprises two curved path carriers (30, 30' or 20, 20') which are associated with the two stabiliser parts (5, 5') and can be rotated with respect to one another about a common longitudinal axis (8), in the curved paths (31, 31' or 21, 21') of which, which differ from one another, extend at least section-wise substantially in the direction of the common longitudinal axis (8) and are configured as grooves, the coupling element (32) projecting into these grooves and bracing the curved path carriers (30, 30' or 20, 20') with respect to one another, is guided, **characterised in that** the grooves have parallel groove flanks, which are widened at least at one end of each curved path (21, 21') in such a way that the coupling element (32) there, without prestressing its individual parts with respect to one another, can be introduced into the curved path carriers (20, 20') and/or assembled therein.

2. An oscillating motor (1) according to claim 1, **characterised in that** the otherwise parallel groove flanks are widened at least at one end of each curved path (21, 21') on the groove flank side remote from the load during operation of the oscillating motor (1).

3. A method for assembling a curved path gear mechanism according to either of claims 1 or 2, **characterised in that** the coupling element (32) and curved path carriers (20, 20') are aligned with respect to one another in the central position, before the first curve roller bolt pair (34a or 34b) of the coupling element (32) is introduced and assembled without prestressing into the curved path carriers (20, 20'), wherein, after alignment to position the curved path carriers (20, 20') with respect to one another, a centring pin is inserted through, in each case, a continuous, radially directed centring bore (27, 27') introduced into the curved path carriers (20, 20') during manufacture of the curved paths (21, 21').

## Revendications

1. Moteur rotatif (1) pour la régulation du roulis, lié de façon à transmettre le couple aux deux parties (5, 5') d'un stabilisateur de véhicule automobile et qui comporte au moins un servomoteur (2) pour un élément de couplage (32) guidé coulissant sur une broche d'entraînement, ainsi qu'un engrenage à pistes courbes chargé par celui-ci, qui consiste en deux supports de pistes courbes (30, 30' ou 20, 20'), associés aux deux parties de stabilisateur (5, 5'), pouvant pivoter l'un par rapport à l'autre autour d'un axe longitudinal commun (8), dans lesquels est guidé l'élément de couplage (32) dans des pistes courbes (31, 31' ou 21, 21') sous forme de rainures, distinctes les unes des autres et s'étendant au moins par sections essentiellement en direction de l'axe longitudinal commun (8), cet élément de couplage (32) dépassant dans ces rainures et mettant sous tension les supports de pistes courbes (30, 30' ou 20, 20') l'un par rapport à l'autre,
**caractérisé en ce que**
les rainures possèdent des flancs parallèles, élargis au moins à une extrémité de chaque piste courbe (21, 21'), de façon telle que l'élément de couplage (32) peut être introduit dans les supports de pistes courbes (20, 20') et/ou monté dans ceux-ci sans mettre en précontrainte ses différentes pièces l'une par rapport à l'autre.

2. Moteur rotatif (1) selon la revendication 1,
**caractérisé en ce que**
les flancs des rainures, qui sinon sont parallèles, sont élargis au moins à une extrémité de chaque piste courbe (21, 21') sur le côté des flancs de rainures éloigné de la charge pendant la marche du moteur rotatif (1).

3. Procédé pour le montage d'un engrenage à pistes courbes selon l'une des revendications 1 ou 2,
**caractérisé en ce que**
l'élément de couplage (32) et le support de pistes courbes (20, 20') sont dirigés en position médiane l'un vers l'autre, avant que la première paire de boulons de galets de courbe (34a ou 34b) de l'élément de couplage (32) soit introduite et montée sans précontrainte dans les supports de pistes courbes (20, 20'), une tige de centrage étant enfichée par un trou de centrage (27, 27'), traversant, dirigé radialement, ménagé à la fabrication des supports de pistes courbes (21, 21) après l'ajustement pour le positionnement des supports de pistes courbes (20, 20') l'un par rapport à l'autre.
